# EUROPEAN PATENT SPECIFICATION

(11) **EP 1 139 249 B1**
(45) Date of publication and mention of the grant of the patent: **25.02.2004**
(21) Application number: 00480114.8
(22) Date of filing: 07.12.2000
(51) Int. Cl.: G06F 17/60

(54) **Method and system in an electronic spreadsheet for adding or removing elements from a cell named range according to different modes**
Verfahren und System zum Addieren und Löschen von Elementen in einem Bereich von mit Namen versehenen Zellen entsprechend verschiedener Methoden in einem elektronischen Kalkulationsblatt
Méthode et système pour ajouter et retirer des éléments de différentes manières dans une rangée de cellules nommées dans une feuille de calcul électronique

(30) Priority: 06.01.2000 EP 00480009
(43) Date of publication of application: 04.10.2001
(73) Proprietor: INTERNATIONAL BUSINESS MACHINES CORPORATION, Armonk, NY 10504 (US)
(72) Inventor: Harari, Albert, 06100 Nice (FR); Bauchot, Frédéric, 06640 St Jeannet (FR)
(74) Representative: Etorre, Yves Nicolas

(56) References cited:
- EP-A- 0 569 133
- US-A- 5 418 898
- US-A- 5 742 835

## Description

### Technical field of the invention

The present invention relates to the field of information processing by digital computers, and more particularly to a method and system, in an electronic spreadsheet, for preserving some "summary" information of a cell named range when some spread sheet elements (like rows, or columns, or pages) are added or removed from the cell named range.

### Background art

Before computers, numerical analyses, particularly financial ones, were usually prepared on an accountant's columnar pad or spreadsheet, with pencil and calculator in hand. By organizing data into columns and rows, spreadsheets afford the rapid assimilation of information by a reader. The task of preparing a spreadsheet on paper, however, is not quite so fast. Instead, the process tends to be very slow, as each entry must be tediously calculated and entered into the spreadsheet. Since all calculations are the responsibility of the preparer, manually prepared spreadsheets are also prone to errors. Hence, preparation of spreadsheets by hand is slow, tedious, and unreliable.

With the advent of microcomputers, a solution was forthcoming in the form of "electronic spreadsheets." Better known simply as "spreadsheets," these software programs provide a computerized replacement for the traditional financial modelling tools: the accountant's columnar pad, pencil, and calculator. In some regards, spreadsheet programs are to those tools what word processors are to typewriters. Spreadsheets offer dramatic improvements in ease of creating, editing, and using financial models.

A typical spreadsheet program configures the memory of a computer to resemble the column/row or grid format of an accountant's columnar pad, thus providing a visible calculator for a user. Because this "pad" exists dynamically in the computer's memory, however, it differs from paper pads in several important ways. Locations in the electronic spreadsheet, for example, must be communicated to the computer in a format which it can understand. A common scheme for accomplishing this is to assign a number to each row in a spreadsheet, a letter to each column, and another letter to each sheet (or page) of the spreadsheet. To reference a location at column A and row 1 of the second page (i.e., the upper-left hand corner), for example, the user types in "B:A1". In this manner, the spreadsheet defines an addressable storage location or "cell" at each intersection of a row with a column within a given page.

Data entry into an electronic spreadsheet occurs in much the same manner that information would be entered on an accountant's pad. After a screen cursor is positioned at a desired location, the user can enter alphanumeric information.

Besides holding text and numeric information, however, spreadsheet cells can store special instructions or "formulas" specifying calculations to be performed on the numbers stored in spreadsheet cells. Such spreadsheet cells can also be defined and named as a range as long as they are arranged as a connex set of cells. A typical example of such a named range simply corresponds to a regular table found in an accountant's pad. In this fashion, range names can serve as variables in an equation, thereby allowing precise mathematical relationships to be defined between cells. The structure and operation of a spreadsheet program, including advanced functions such as functions and macros, are documented in the technical, trade, and patent literature. For an overview, see e.g., Cobb, S., *Using Quattro Pro* 2, Borland-OsbomeIMcGraw-Mll, 1990; and LeBlond, G. and Cobb, D., *Using* 1-2-3, Que corp., 1985.

Electronic spreadsheets offer many advantages over their paper counterparts. For one, electronic spreadsheets are much larger (i.e., hold more information) than their paper counterparts; electronic spreadsheets having thousands or even millions of cells are not uncommon. Spreadsheet programs also allow users to perform "what-if" scenarios. After a set of computational relationships has been entered into a worksheet, thanks to imbedded formulas for instance, the spread of information can be recalculated using different sets of assumptions, with the results of each recalculation appearing almost instantaneously. Performing this operation manually, with paper and pencil, would require recalculating every relationship in the model with each change made. Thus, electronic spreadsheet systems were invented to solve "what-if' problems, that is, changing an input and seeing what happens to an output.

Named ranges used to automate the computations in a spreadsheet can evolve during the "life" of a spreadsheet just as some entries may be added to or deleted from a classical table found in an accountant's pad. Conventional spreadsheet tools offer some means for automatically adjusting the content of an existing named range when new elements (typically a new column, a new row or a new sheet) are added between elements already pertaining to the named range, or when some elements (typically a column, a row or a sheet) already pertaining to the named range are deleted. It is common to find in conventional spreadsheets some "summary" information, such as the sum of a given set of cells, or the average value of a given set of cells. When such a "summary" information is itself recorded within an element common to the named range it relates to, then the deletion of some elements (typically a column, a row or a sheet) may result in the disappearance of the "summary" information if this information is located within the deleted elements. Furthermore such a "summary" information may be referenced (for instance as the parameter of a formula) in another cell of the spreadsheet. In such a case, the disappearance of the "summary" information results in an "ERR" cell, translating the fact that conventional spreadsheet are not able to resolve the reference of a deleted cell. This limitation can be quite cumbersome in the frequent case where elements of a table must follow a predefined format imposing that such a range "summary" information be defined within elements shared with the range it relates to.

US patent 5,418,898 (Zand Mark et al, 23 May 1995) entitled "Multidimensional Data Display System and Method" discloses a data display system and method that provides for creation of multidimensional data displays in which the dimensions have one or more dimension elements and the display has display cells at dimension element intersections. Provisions are made for allowing rearrangement of display dimensions, reordering of display elements, and sorting within any dimension along with the maintenance of topological formulas during insertions, deletions, sorting and rearrangements. Further included is provision for support of both symmetrical and asymmetrical multidimensional spreadsheets.

US patent 5,742,835 (Kaethler Richard Lawrence, 21 April 1998) entitled "Method and System of Sharing Common Formulas in a Spreadsheet Program and of Adjusting the same to Conform with Editing Operations" discloses a method and system of adjusting shared formulas in a spreadsheet program in response to editing operations. Upon an editing operation, the boundary line of cells that are shifted is determined with respect to the location of the cell sharing a common formula and to the location of the cell references therein. On the bases of the relative location of the boundary line, the present invention adjusts the shared formulas. Furthermore, a method and system is provided for partitioning large cell groups having common formulas into smaller areas of common formulas and sharing a separate shared formula for each smaller area in order to allow efficient adjustments of shared formulas in response to editing operations.

European patent application 0 569 133 A2 (Anderson Charles, 10 November 1993) entitled "System and Methods for Computer Interfaces" discloses an electronic interface to a spreadsheet system including a notebook interface having a plurality of notebook pages, each of which contain a spread of information cells, or other desired page type. Methods are provided for rapidly accessing and processing information on the different pages, including displaying a plurality of page identifiers for selecting individual pages, and further including a preferred syntax for referencing information. Additional methods are provided for editing cells and blocks of cells.

### Summary of the invention

The present invention relates to the field of information processing by digital computers, and more particularly to a method and system, in an electronic spreadsheet, for preserving some "summary" information of a cell named range when some spreadsheet elements (like rows, or columns, or pages) are added or removed from said cell named range. The method of processing a range summary cell in a multi dimensional spreadsheet comprising a plurality of cells identified by a cell address, comprises the steps of:
- defining a range summary cell by specifying in a table:
   - a range summary cell address;
   - a cell range address identifying an associated cell range;
   said range summary cell address being function of the specified cell range address;

In response to an user request for adding or deleting a spreadsheet element sharing a common cell address along at least one dimension with the cell range associated with the range summary cell:
- updating in the table, the cell range address of the cell range associated with the range summary cell according to the user request;
- updating in the table, the range summary cell address according to the updated cell range address;
- moving in the spreadsheet, the range summary cell according to the updated range summary cell address;
- adding or deleting the spreadsheet element according to the user request;
- updating in the table, the cell range address after the addition or the deletion of the spreadsheet element;
- updating in the table, the range summary cell address according to the updated cell range address.

### Brief description of the drawings

The novel and inventive features believed characteristics of the invention are set forth in the appended claims. The invention itself, however, as well as a preferred mode of use, further objects and advantages thereof, will best be understood by reference to the following detailed description of an illustrative detailed embodiment when read in conjunction with the accompanying drawings, wherein :
- Figure 1A is a block diagram of a computer system in which the present invention may be embodied.
- Figure 1B is a block diagram of a software system including an operating system, an application software, and a user interface for carrying out the present invention.
- Figure 1C illustrates the basic architecture and functionality of a graphical user interface in which the present invention may be embodied.
- Figure 2A shows a spreadsheet notebook interface according to the preferred embodiment of the present invention.
- Figure 2B shows the toolbar component of the notebook interface shown in Figure 2A.
- Figures 2C and 2D show page identifiers for rapidly accessing and manipulating individual pages of the notebook interface shown in Figure 2A.
- Figure 3 illustrates four different tables (FIG 3A, 3B, 3C and 3D) representing examples of Range Summary cells and conventional cells behaviour upon row deletion.
- Figure 4 illustrates the structure of the Associate Range Table according to the preferred embodiment of the present invention.
- Figure 5 is a flow chart illustrating a preferred method for specifying how a given cell can take advantage of the present invention.
- Figure 6 is a flow chart illustrating a preferred method for updating a Range Summary cell upon the deletion or introduction of elements (row or column or sheet) according to the present invention.

### Detailed description of the preferred embodiment

### SYSTEM HARDWARE

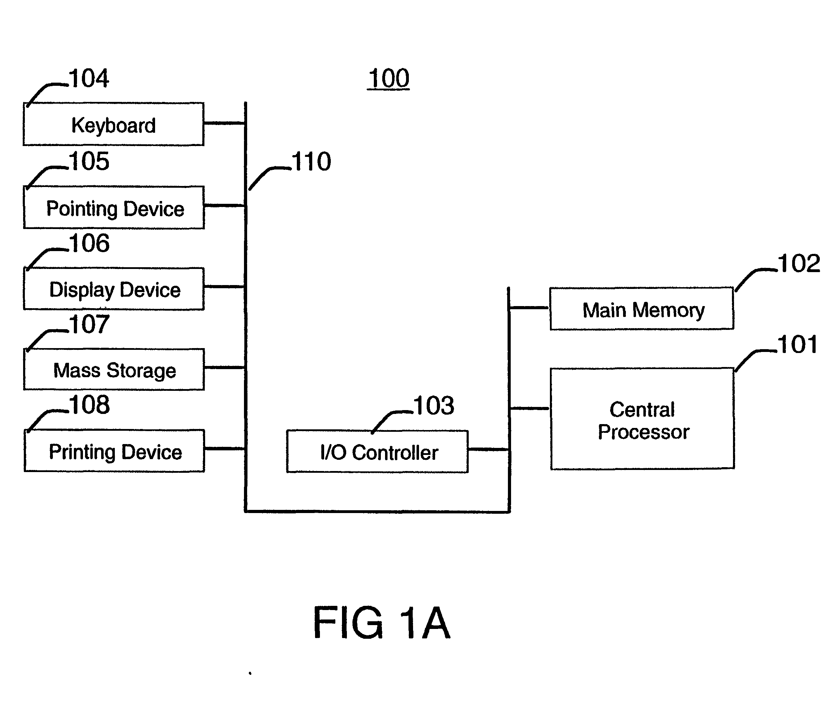

As shown in FIG. 1A, the present invention may be embodied on a computer system 100 comprising a central processor 101, a main memory 102, an input/output controller 103, a keyboard 104, a pointing device 105 (e.g., mouse, track ball, pen device, or the like), a display device 106, and a mass storage 107 (e.g., hard disk). Additional input/output devices, such as a printing device 108, may be included in the system 100 as desired. As illustrated, the various components of the system 100 communicate through a system bus 110 or similar architecture. In a preferred embodiment, the computer system 100 includes an IBM-compatible personal computer, which is available from several vendors (including International Business Machine - IBM Corporation of Armonk, N.Y.).

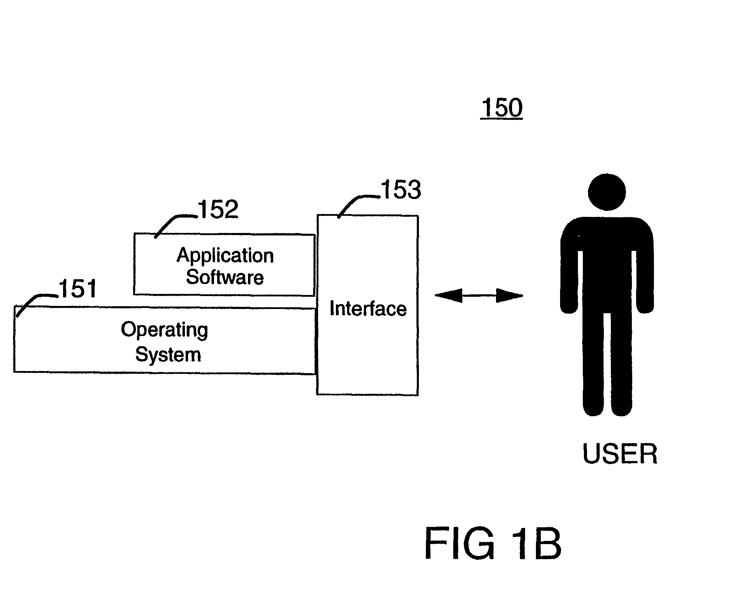

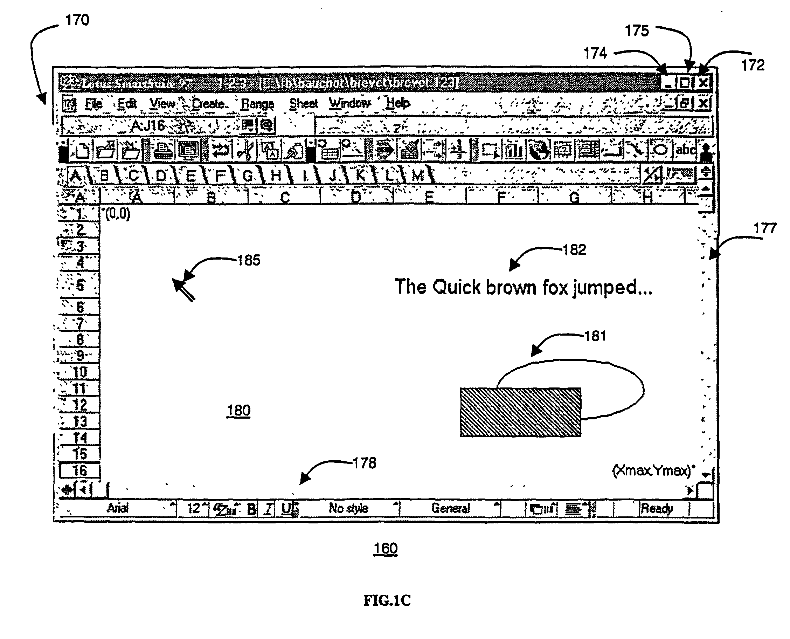

Illustrated in FIG. 1B, a computer software system 150 is provided for directing the operation of the computer system 100. Software system 150, which is stored in system memory 102 and on disk memory 107, includes a kernel or operating system 151 and a shell or interface 153. One or more application programs, such as application software 152, may be "loaded' (i.e., transferred from storage 107 into memory 102) for execution by the system 100. The system 100 receives user commands and data through user interface 153; these inputs may then be acted upon by the system 100 in accordance with instructions from operating module 151 and/or application module 152. The interface 153, which is preferably a graphical user interface (GUI), also serves to display results, whereupon the user may supply additional inputs or terminate the session. In a preferred embodiment, operating system 151 and interface 153 are Microsoft Win95, available from Microsoft Corporation of Redmond, Wash. Application module 152, on the other hand, includes a spreadsheet notebook of the present invention as described in further detail herein below.

### INTERFACE

### A. Introduction

The following description will focus on the presently preferred embodiments of the present invention, which are embodied in spreadsheet applications operative in the Microsoft Win95 environment. The present invention, however, is not limited to any particular application or any particular environment. Instead, those skilled in the art will find that the system and methods of the present invention may be advantageously applied to a variety of system and application software, including database management systems, word processors, and the like. Moreover, the present invention may be embodied on a variety of different platforms, including Macintosh, UNIX, NextStep, and the like. Therefore, the description of the exemplary embodiments which follows is for purposes of illustration and not limitation.

Referring now to FIG. 1C, the system 100 includes a windowing interface or workspace 160. Window 160 is a rectangular, graphical user interface (GUI) for display on screen 106; additional windowing elements may be displayed in various sizes and formats (e.g., tiled or cascaded), as desired. At the top of window 160 is a menu bar 170 with a plurality of user-command choices, each of which may invoke additional submenus and software tools for use with application objects. Window 160 includes a client area 180 for displaying and manipulating screen objects, such as graphic object 181 and text object 182. In essence, the client area is a workspace or viewport for the user to interact with data objects which reside within the computer system 100.

Windowing interface 160 includes a screen cursor or pointer 185 for selecting and otherwise invoking screen objects of interest. In response to user movement signals from the pointing device 105, the cursor 185 floats (i.e., freely moves) across the screen 106 to a desired screen location. During or after cursor movement, the user may generate user-event signals (e.g., mouse button "clicks" and "drags") for selecting and manipulating objects, as is known in the art. For example, Window 160 may be closed, re-sized, or scrolled by "clicking" (selecting) screen components 172, 174/5, and 177/8, respectively.

In a preferred embodiment, screen cursor 185 is controlled with a mouse device. Single-button, double-button, or triple-button mouse devices are available from a variety of vendors, including Apple Computer of Cupertino, Calif., Microsoft Corporation of Redmond, Wash., and Logitech Corporation of Fremont, Calif., respectively. More preferably, screen cursor control device 105 is a two-button mouse device, including both right and left "mouse buttons."

Programming techniques and operations for mouse devices are well documented in the programming and hardware literature; see e.g., *Microsoft Mouse Programmer's Reference*, Microsoft Press, 1989. The general construction and operation of a GUI event-driven system, such as Windows, is also known in the art: see, e.g., Petzold, C., *Programming Windows,* Second Edition, Microsoft Press, 1990.

### B. Preferred interface

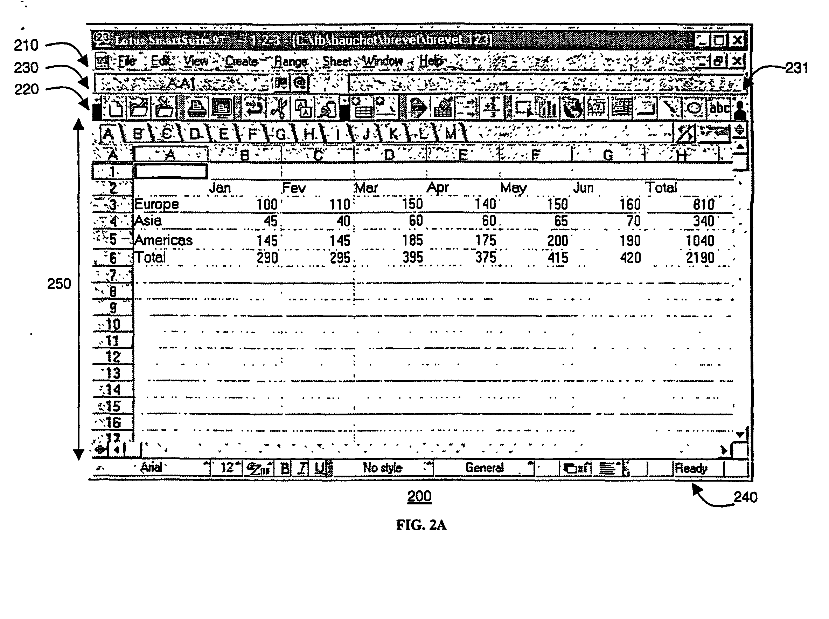

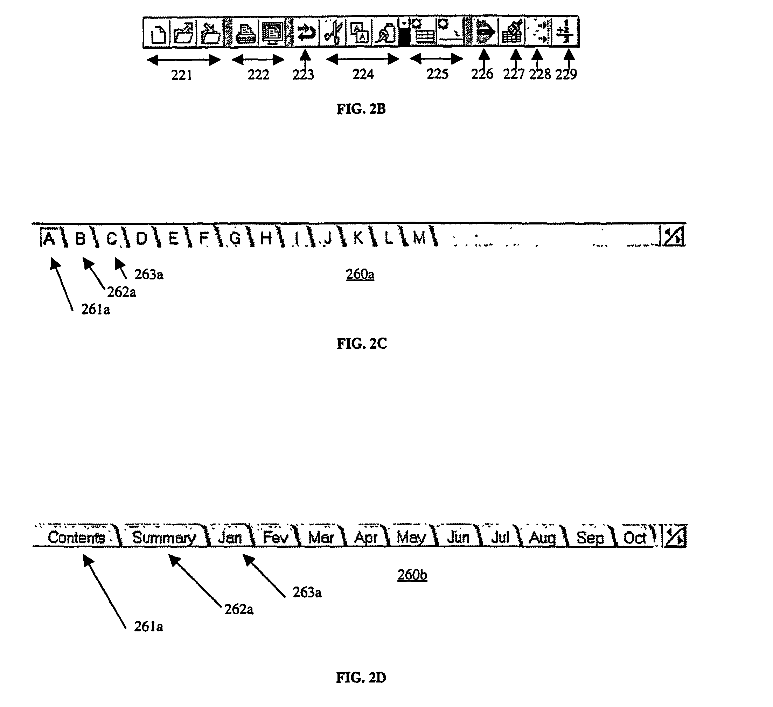

Shown in FIG. 2A, a spreadsheet notebook interface of the present invention will now be described The spreadsheet notebook or workbook of the present invention includes a notebook workspace 200 for receiving, processing, and presenting information, including alphanumeric as well as graphic information. Notebook workspace 200 includes a menu bar 210, a toolbar 220, a current cell indicator 230, an input line 231, a status line 240, and a notebook window 250. The menu bar 210 displays and invokes, in response to user inputs, a main level of user commands. Menu 210 also invokes additional pull down menus, as is known in windowing applications. Input line 231 accepts user commands and information for the entry and editing of cell contents, which may include data, formulas, macros, and the like. Indicator 230 displays an address for the current cursor (i.e., active cell) position, or the address or name of a selected named range (i.e. active selection). At the status line 240, system 100 displays information about the current state of the workbook; for example, a "READY" indicator means that the system is ready for the user to select another task to be performed.

The toolbar 220, shown in further detail in FIG. 2B, comprises a row or palette of tools which provide a quick way for the user to choose commonly-used menu commands or properties. In an exemplary embodiment, toolbar 220 includes file manipulation buttons 221, printing buttons 222, an undo button 223, cut, copy, and paste buttons 224, information pop-up window buttons tool 225, a named range selection button 226, a style copy button 227, a column re-sizing button 228, and a sum button 229. The functions of these buttons are suggested by their names. For instance, buttons 224 cut, copy and paste data and objects to and from Windows' clipboard. The same actions are also available as corresponding commands in the Edit menu (available from menu bar 210).

The notebook, which provides an interface for entering and displaying information of interest, includes a plurality of spreadsheet pages. Each page may include conventional windowing features and operations, such as moving, re-sizing, and deleting. In a preferred embodiment, the notebook includes 256 spreadsheet pages, all of which are saved as a single disk file on the mass storage 107. Workspace 200 may display one or more notebooks, each sized and positioned (e.g., tiled, overlapping, and the like) according to user-specified constraints.

Each spreadsheet page of a notebook includes a 2-D spread. Page A from the notebook 200, for example, includes a grid in row and column format, such as row 3 and column F. At each row/column intersection, a box or cell (e.g., cell C4) is provided for entering, processing, and displaying information in a conventional manner. Each cell is addressable, with a selector being provided for indicating a currently active one (i.e., the cell that is currently selected).

As shown in FIGS. 2C-D, individual notebook pages are identified by page identifiers 260, preferably located along one edge of a notebook. In a preferred embodiment, each page identifier is in the form of a tab member (e.g., members 261a, 262a, 263a) situated along a top edge of the notebook. Each tab member may include representative indicia, such as textual or graphic labels, including user selected titles representing the contents of a corresponding page. In FIG. 2C, the tab members 260 are set to their respective default names. For example, the first three tab members (members 261a, 262a, 263a) are respectively set to A, B, and C. Tab members are typically given descriptive names provided by the user, however. As shown in FIG. 2D, for example, the first three tab members have now been set to "Contents" (tab member 261b), "Summary" (tab member 262b), and "Jan" (tab member 263b). In a similar manner, the remaining tabs are set to subsequent months of the year. In this manner, the user associates the page identifiers with familiar tabs from an ordinary paper notebook. Thus, the user already knows how to select a page or spread of interest: simply select the tab corresponding to the page (as one would do when selecting a page from a paper notebook).

In addition to aiding in the selection of an appropriate page of information, the user-customizable page identifiers serve aid in the entry of spreadsheet named range addresses. For example, when entering a formula referring to a named range of cells on another page, the user may simply use the descriptive page name in the named range address, thus making it easier for the user to understand the relationship of the cell(s) or information being referenced.

A general description of the features and operation of the spreadsheet notebook interface may be found in Quattro Pro for Windows *(Getting Started, User's Guide and Building Spreadsheet Applications),* available from Borland International.

### MANAGEMENT OF NAMED RANGES

### A. Introduction

As the power of spreadsheet environments has increased since several years, it is today possible to develop complex custom applications solely based on spreadsheets, as opposed to applications developed with general purpose programming languages like C++ or VisualBasic from Microsoft Corporation. This can be achieved thanks to the spreadsheet imbedded tools such as macro languages, script languages and formulas which all manipulate spreadsheet named ranges, whatever these named ranges correspond to single elements of information (a single cell named range), or to multiple elements of information (a complex named range).

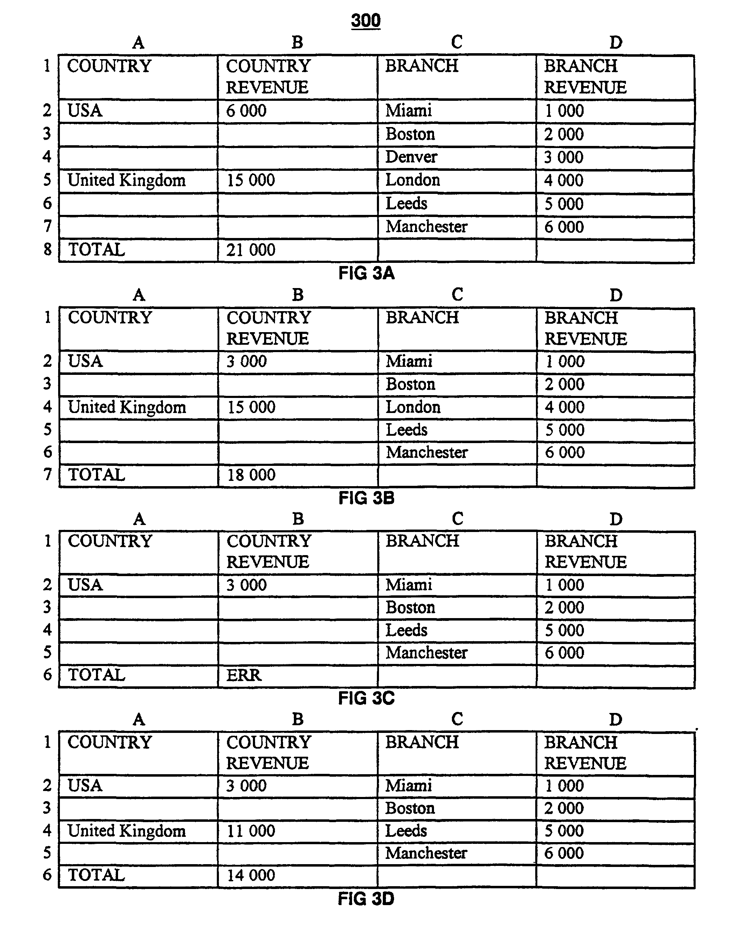

In typical spreadsheet based applications, it is common to find tables whose content (or a subset of it) is declared as a named range. Defining such named ranges makes easy the retrieval of "summary' information from the table, for instance by using database oriented functions able to perform some computations (summing, averaging for instance) for the table entries matching a given set of criteria. Such "summary" information may themselves be located within elements shared with the named range if compliance with some predefined format must be ensured, or simply for readability purpose. When elements are removed from the named range, it may happen that they comprise named range "summary" information. In such a case, this "summary" information is simply destroyed, and any external reference to it will result in an "ERR" cell, so that all the power of the spreadsheet will be lost. With conventional notations, let assume that an international company uses a spreadsheet to record the revenue of its branches within a range defined as A:A1..A:D8, as shown in FIG 3A.
With this table structure, each row is associated to a unique branch, and the different branches are sorted by country. Furthermore the last row holds the world-wide revenue by summing all the country revenues. The format used in this table asks to record:
- in column A the country where the branch resides,
- in column B the cumulated revenue of all the branches within a country,
- in column C the branch location, and
- in column D the revenue of the branch.

For readability purpose, the information recorded in column A and B must appear once per country. Looking more specifically at the column B, and for instance at the cells A:B2 and A:B5, the cumulated revenue for USA is evaluated thanks to a formula that may take the form @SUM(A:D2..A:D4), and the cumulated revenue for United Kingdom is evaluated thanks to a formula that may take the form @SUM (A:D5..A:D7). Doing so, the cells A:B2 and A:B5 appear to hold some "summary" information respectively associated to the ranges A:D2..A:D4 and A:D5..A:D7. Finally the global revenue appearing in cell A:B8 is computed as the sum of USA and United Kingdom revenues, for instance with a formula of the kind "+A:B2+A:B5".

Let assume now that the branch of Denver (recorded in row 4) is closed, so that any reference to it must be removed from the revenue spreadsheet. The classical way to update the revenue table accordingly is simply to remove the row 4. With conventional spreadsheets, the result of this operation corresponds to the updated table, as shown in FIG 3B.

The country revenue for USA has been correctly updated as the cell A:B2 now holds a formula that may take the form @SUM(A:D2..A:D3). Indeed the deletion of the row 4 has transformed the initial range A:D2..A:D4 into the new range A:D2..A:D3. In addition the global revenue appearing in the last row has also been correctly updated.

Let assume now that the branch of London (recorded in row 4) is closed, so that any reference to it must be removed from the revenue spreadsheet. The classical way to update the revenue table accordingly is simply to remove the row 4. With conventional spreadsheets, the result of this operation corresponds to the updated table, as shown in FIG 3C.

The country revenue for United Kingdom was recorded on the spreadsheet element (the row 4) which has been deleted to reflect the London branch close. Thus this "summary" information is now lost, resulting in an erroneous result in the cell A:B6 holding the global revenue. Indeed this cell now comprises a formula of the kind "+A:B2+ERR", resulting in an ERR result.

The present invention offer a user-friendly solution to this problem by allowing any cell declared as a "Range Summary information" to be preserved, even when the spreadsheet element holding it is removed.

### B. Range Summary Manager

In contrast to just-described conventional tools, the present invention provides a more powerful, user-friendly and interactive approach for managing the definition and update of "Range Summary information" in a form of a Range Summary Manager. The manager automatically allows the spreadsheet user to define if and how a cell must behave as a so-called "*range summary"* cell (as opposed to so-called *"conventional"* cell).

The present invention is directed to a method and system for defining and managing within a spreadsheet a new type of cells, referred to in the following as a *"Range Summary"* cell, as opposed to classical cells referred to as "*Conventional*" cells.
- Conventional cell: In typical spreadsheet programs organised as a 3D (three dimensions) structure (the three axis being the row axis, the column axis and the sheet axis), a conventional cell can be formally defined as the intersection of three plans orthogonal to each axis. Furthermore, there is no required specific relationship between a conventional cell and any range, even if the content of the conventional cell depends on a range.
- Range Summary cell: such a cell can also be defined like conventional cells as the intersection of three plans orthogonal to each axis, but a Range Summary cell is uniquely associated to a given range, so that it must "live" as long as the range lives. This mean that the definition of a cell as a Range Summary cell is important as soon as this cell is within a spreadsheet element (for instance a row or column or sheet) shared by the range it is associated to.

On top of the relationship defined between a Range Summary cell and the range it is associated to, another "position" information must be specified when a Range Summary cell is defined. Under the example given in FIG 3B, the cells whose addresses are A:A4 and A:B4 are Range Summary cells associated to the range A:D4..A:D6. The position information they have corresponds to the fact that these cells have to be located on the same row as the upper row of the associated range A:D4..A:D6, that is in this example the row 4, on the sheet A and respectively in columns A and B. With this position information defined, if the row 4 is now removed (to reflect for instance the closure of the London branch), then the range A:D4..A:D6 is updated and becomes the range A:D4..A:D5, with 5000 as the content of the cell A:D4 and with 6000 as the content of the cell A:D5. With this range update, the upper row of the range is still the row 4, meaning that the associated Range summary cells will stay with their previous positions, respectively A:A4 and A:B4, even if the row 4 where they were previously contained has been deleted. The resulting table is shown in FIG 3D which is error free, as opposed to the table shown in FIG 3C where the global revenue shown in cell A:B6 is in error.

### C. Range Summary Cells

In a preferred embodiment, cells that can be specified as Range Summary cells belong to an electronic spreadsheet having a 3D structure, which is organised along three different axis: the row axis, the column axis, and the sheet axis. When selected, cells can be easily identified on the display device 106 within the work area 180 of the window 160 by using some specific cell attributes, such as a font style or font colour or background colour, etc... Similar attributes can also be used on the display device 106 to identify the range associated to the selected Range Summary cell. In a preferred embodiment, the border line of a selected Range Summary cell is set to bold (as for conventional selected cells), but in addition the border line of the selected Range Summary cell is in blinking mode, and the background colour of the associated range is set to blinking mode.

In a preferred embodiment, the present invention is used in two steps :
- 1. The first step occurs when the spreadsheet user decides, based on some criteria not detailed here, whether a given cell deserves to take advantage of the Range Summary manager or not.
   - The user first selects the relevant cell by using the pointing device 105 or the keyboard 104 and then invokes a specific command called *"Associate_Range"* thanks to conventional means available in spreadsheet environment, such as (but not limited to) dedicated push-buttons, keyboard entry short cuts, menu or sub-menu entries. The user first specifies the range associated to the selected cell, and then for each of the three axis introduced above (row, column, sheet), the user specifies the relative position of the selected cell with respect to the associated range. At completion of the Associate_Range command, the selected cell border line is set to blinking mode, and the background colour of the associated range is set to blinking mode. This same command can also be used to update the definition of a cell already specified as a Range Summary.
   - During the execution of the Associate_Range command, the spreadsheet program updates an internal table called the "Associate Range Table", aimed to record the relationship between a Range Summary cell and its associated range, and the relative position of the Range Summary cell with respect to the associated.
- 2. The second step occurs when the user deletes some elements (rows, or columns, or sheets) in the spreadsheet by using conventional means. Conventional spreadsheet programs invoke internal routines aimed to adjust the definition of all the ranges impacted by the deletion of some elements. During the execution of this conventional routine, all impacted ranges are updated, as well as any cross-references to them. With the present invention, the spreadsheet program invokes in addition a specific internal routine referenced to as *"Update Range Summary Cells"* which further updates the definitions and positions of the range summary cells according to the impact of their associated ranges. As justified later, this second step can also be advantageously invoked in the event where the user introduces new elements (rows, or columns, or sheets) in the spreadsheet by using conventional means.

### D. Associate Range Table

The decision to specify which range is associated to a Range Summary cell, and what is the relative position of the Range Summary cell, belongs to the spreadsheet application user. A single repository, called *"Associate Range Table",* is used to record this information. This Associate Range Table is preferably saved on a non volatile memory (typically but not necessary as part of the spreadsheet disk file on the mass storage 107).

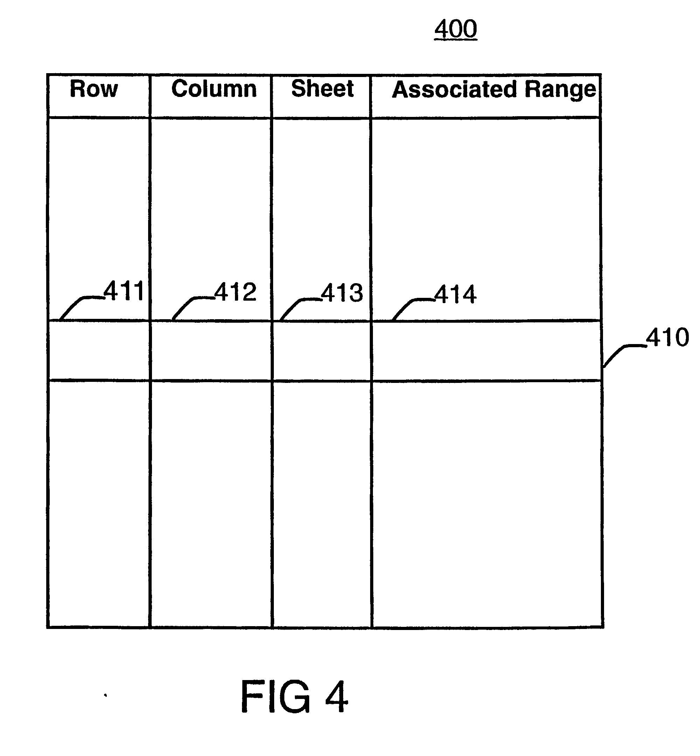

Referring now to FIG. 4, the Associated Range Table 400 corresponds to a logical simple structure made of several records 410, each of them associated with a Range Summary cell. Each record includes four fields:
- The *"Row"* field 411 is used for recording the row coordinate of the Range Summary cell. Such a coordinate can be an absolute coordinate (i.e. without any relationship with the associated range), or a relative coordinate depending on the associated range address. In the later case, the relative coordinate is defined thanks to a formula which can take several forms, as illustrated in the following non exhaustive list.
   - It can be defined as a fixed offset with respect to the row coordinates of the associated range boundaries, such as for instance the row coordinate of the top cell of the associated range, incremented by one (meaning that the Range Summary cell will be on the row just bellow the upper row of the associated range).
   - It can be defined as a barycenter of the range boundaries row coordinates, such as for instance standing at the bottom of the top third of the range.
   - It can be a combination of both previous cases, that is a constant offset to a barycenter of the range boundaries row coordinates.
      In the Case of the Range Summary cell A:A4 in FIG 3B (whose content is "United Kingdom"), the "Row" field 411 is defined as being a relative coordinate, that is the row coordinate of the upper boundary of the associated range A:D4..A:D6.
- The *"Column"* field 412 is used for recording the column coordinate of the Range Summary cell. Such a coordinate can be an absolute coordinate (i.e. without any relationship with the associated range), or a relative coordinate depending on the associated range address. In the later case, the relative coordinate is defined thanks to a formula which can take several forms, as illustrated in the following non exhaustive list.
   - It can be defined as a fixed offset with respect to the column coordinates of the associated range boundaries, such as for instance the column coordinate of the leftmost cell of the associated range, incremented by one (meaning that the Range Summary cell will be on the column just at the right of the leftmost column of the associated range).
   - It can be defined as a barycenter of the range boundaries column coordinates, such as for instance standing at the right of the leftmost third of the range.
   - It can be a combination of both previous cases, that is a constant offset to a barycenter of the range boundaries column coordinates.
   - In the Case of the Range Summary cell A:A4 in FIG 38 (whose content is "United Kingdom"), the "Column" field 412 is defined as being an absolute coordinate, whose value is set to A.
- The "*Sheet*" field 413 is used for recording the sheet coordinate of the Range Summary cell. Such a coordinate can be an absolute coordinate (i.e. without any relationship with the associated range), or a relative coordinate depending on the associated range address. In the later case, the relative coordinate is defined thanks to a formula which can take several forms, as illustrated in the following non exhaustive list.
   - It can be defined as a fixed offset with respect to the sheet coordinates of the associated range boundaries, such as for instance the sheet coordinate of the most forward cell of the associated range, incremented by one (meaning that the Range Summary cell will be on the sheet just behind the forground sheet of the associated range).
   - It can be defined as a barycenter of the range boundaries sheet coordinates, such as for instance standing behind the forward third of the range.
   - It can be a combination of both previous cases, that is a constant offset to a barycenter of the range boundaries sheet coordinates.
      In the Case of the Range Summary cell A:A4 in FIG 3B (whose content is "United Kingdom"), the "Sheet" field 413 is defined as being an absolute coordinate, whose value is set to A.
- The *"Associated Range*" field 415 is used to identify the range associated to the Range summary cell. This identification can be done for instance by using the coordinates of this range, or by using its name if it corresponds to a named range.

It is important to notice that the present invention mainly relies on the relation established between the user defined Range Summary cell and the range it is associated to. Both of them have the attributes of conventional electronic spreadsheet objects in the sense that they are automatically adjusted by conventional means when some elements are deleted, but in addition the Range Summary cells are kept alive, even if they are within the deleted elements, as long as their associated range is not deleted.

In the preferred embodiment, the Associate Range Table is explicitly included within the spreadsheet file itself, but other obvious implementations can instead rely on other means.

### E. Associate_Range method

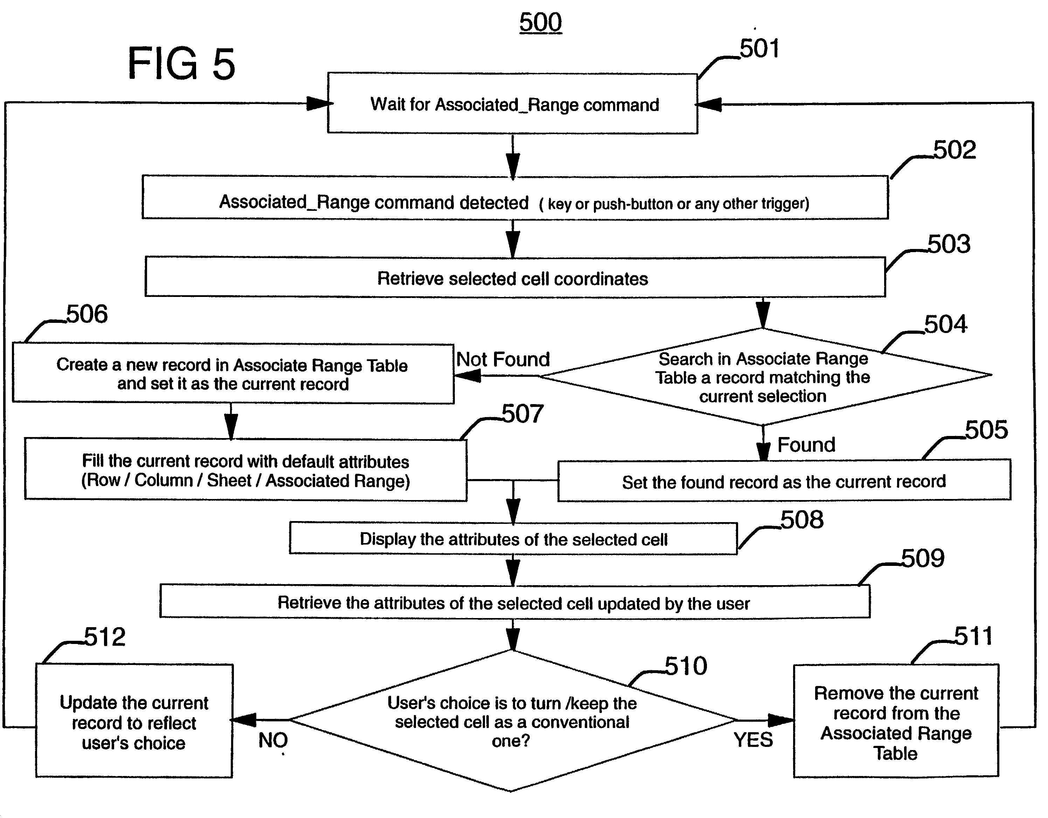

The method for enabling or disabling a given cell to take advantage of the present invention is summarized in flowchart 500 of FIG 5. This method can be seen as the processing of the *"Associate_Range"* command. The method comprises the following steps :
- At step 501, the method is in its default state, waiting for an event to initiate the process.
- At step 502, an event is detected, as a result of a user action. This action can be for instance a specific combination of key on the keyboard 104, or the click of the pointing device 105 on a specific button, or any other similar means not further specified here.
- At step 503, the coordinates (row, column and sheet) of the currently selected cell are retrieved and memorized.
- At step 504, the Associate Range Table 400 is looked up to find any record 410 whose fields 411 (Row), 412 (Column) and 413 (Sheet) take the same values as the corresponding memorized coordinates of the currently selected cell. If such a matching record 410 is found in the Associate Range Table 400, then control is given to step 505, otherwise control is given to step 506.
- At step 505, the record 410 found during step 504 is set as the current record of the Associate Range Table 400. Control is then given to step 508.
- At step 506, a new record 410 is created in the Associate Range Table 400, and this record is set as the current record of the Associate Range Table 400.
- At step 507, the current record 410 is filled with default attributes. In a preferred embodiment of the present invention, the default values of the fields 411, 412 and 413 (respectively Row, Column and Sheet) correspond to the value of the respective coordinates of the currently selected cell, and the default value of the field 414 (Associated Range) is set to the coordinates of the previously selected range, which can be memorized by classical means.
- At step 508, the different fields of the current record 410 of the Associate Range Table 400 are displayed to the user to let him modify them according to his wishes, by using conventional user-interface means, such as but not limited to navigation with the pointing device 105 within menus and sub-menus, or some specific combination of keys on the keyboard 104. During this step, the user can set or update the range associated to the currently selected cell, the relationships giving the cell coordinates as a function of the associated range coordinates, and also an indicator to have the currently selected cell defined as a Range Summary cell.
- At step 509, the attributes of the selected Range Summary cell, as updated by the user during the step 508, are retrieved. They corresponds to the range associated to the currently selected cell, to the coordinates (row, column, sheet) of the currently selected cell, and to the indicator to define or not the currently selected cell as a Range Summary cell.
- At step 510, a test is done on the above mentioned indicator to determine if the user wishes or not to set or keep the currently selected cell as a conventional cell (as opposed to a Range Summary cell). If it is the case, the control is given to step 511. Otherwise, control is given to step 512.
- At step 511, the current record 410 of the Associate Range table 400 is removed, and then control is given back to the initial step 501, for processing any further new command.
- At step 512, the different fields of the current record 410 of the Associate Range table 400 are updated to reflect the user's choice. They correspond to the fields 411, 412, 413 and 414 where are respectively recorded the relationships providing the row coordinate of the currently selected Range Summary cell, the column coordinate of the currently selected Range Summary cell, the sheet coordinate of the currently selected Range Summary cell, and the range associated with the currently selected Range Summary cell. Then control is given back to the initial step 501, for processing any further new command.

### F. Update_Range_Summary_Cells method

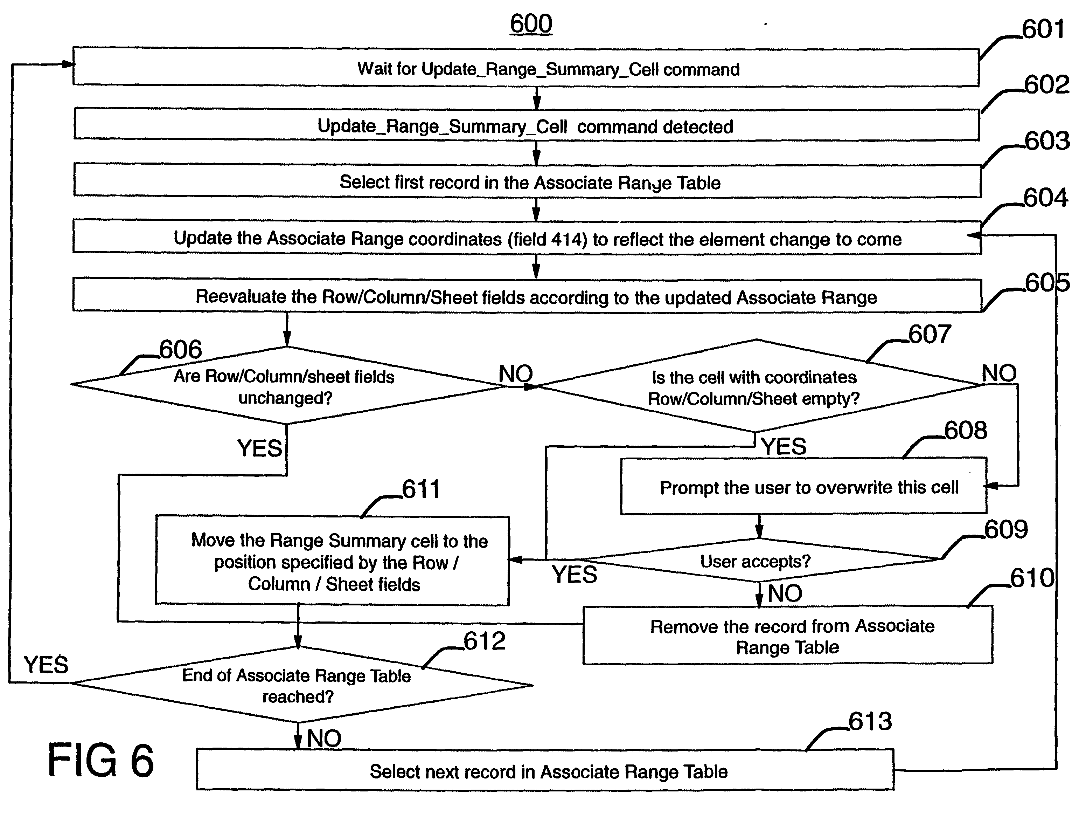

The method according to the present invention for updating a Range Summary cell upon the deletion of elements such as rows, columns and sheets is summarized in flowchart 600 of FIG 6. This method can be seen as an extension of the conventional methods which are applied to conventional cells, and which only update their coordinates to reflect the deletion of elements. This method has to be invoked before the conventional ones, as it corresponds to some kind of "pre-processing" of the Range Summary cells. The method comprises the following steps :
- At step 601, the method is in its default state, waiting for an event to initiate the following process.
- At step 602, the event is detected, as a result of a call to the routine implementing the Update_Range_Summary Cell method, before invoking the conventional routines updating the conventional cells upon the deletion of elements in the spreadsheet.
- At step 603, the first record 410 of the Associate Range Table 400 is selected and becomes the current record.
- At step 604, the coordinate of the Associated Range (as given by field 414) are updated to reflect the element deletion to come. For instance if an associated range is defined between rows 10 and 20 included, and if the rows 15 to 17 are deleted, then the associated range field 414 is defined at the end of this step between rows 10 and 17 included.
- At step 605, the coordinates given by the fields 411, 412 and 413 (respectively Row, Column and Sheet) are updated according to the new value taken by the field 414, as a result of the step 604. For instance if the row definition 411 specifies to be at the bottom row of the associated range (it was row 20 as the associated range was defined between rows 10 and 20 included), then the field 411 takes now the value 17 because the associated range has been redefined between rows 10 and 17 included during the step 604.
- At step 606, a test is performed to check if the three fields 411, 412 and 413 (respectively Row, Column and Sheet) have kept their values unchanged as a result of the step 605. If it is the case, then control is given to step 612. Otherwise control is given to step 607.
- At step 607, a test is performed to check if the cell whose three coordinates match the values given by the three fields 411, 412 and 413 (respectively Row, Column and Sheet), is empty. If it is the case, then control is given to step 611. Otherwise control is given to step 608.
- At step 608, the user is prompted by using conventional user-interface means, such as but not limited to navigation with the pointing device 105 within menus and sub-menus, or some specific combination of keys on the keyboard 104, to determine if he/she accepts that the non empty cell whose three coordinates match the values given by the three fields 411, 412 and 413 (respectively Row, Column and Sheet), can be overwritten by the content of the Range Summary cell corresponding to the current record 410 of the Associated Range Table 400.
- At step 609, a test is performed on the user choice. If the user accepts that the above mentioned cell be overwritten, then control is given to step 611. Otherwise control is given to step 610.
- At step 610, the current record 410 of the Associate Range Table 400 is removed. Indeed it corresponds to the case where the user refuses that a Range Summary cell overwrite an existing non empty cell: in that case the Range Summary cell disappears. Control is then given to step 612.
- At step 611, the Range Summary cell is moved from its current position to the new one specified by the new values taken by the three coordinate fields 411, 412 and 413 (respectively Row, Column and Sheet) resulting from the step 605.
- At step 612, a test is performed to check if all the records 410 of the Associate Range Table 400 have been treated. If it is the case, then control is given back to the initial step 601, for processing any further new command. Otherwise control is given to step 613.
- At step 613, the next record 410 in the Associate Range Table 400 is selected so that the current record becomes the one following the previous one. Then control is given back to step 604 for processing the new current record.
It must be understood that the previously described method is followed by the conventional one(s) in charge of deleting the relevant spreadsheet elements. As a result of such spreadsheet element removal conventional methods, the Range Summary cell address, as well as the address of its associated range, may get updated, so that the pieces of information 411, 412, 413 and 414 within records 410 of the Associate Range Table 400 are also updated.

### ALTERNATE EMBODIMENTS

The improved Range Summary cell management method and system according to the present invention may be used advantageously in those environments where elements of information are organised as multidimensional tables having more than three dimensions.

The improved Range Summary cell management method and system according to the present invention may be used advantageously on a range of cells, as opposed to a single cell. In such a case, all the individual cells pertaining to a Range Summary Range, take advantage of the present invention.

The improved Range Summary cell management method and system according to the present invention may be advantageously extended by invoking the Update_Range_Summary_Cells method in the event where new elements (Rows, Columns or Sheets) are introduced in an electronic spreadsheet. In such a case, this method may result in updating the position of the Range Summary cells whose associated ranges are impacted by the introduction of the new elements.

The improved Range Summary cell management method and system according to the present invention may be advantageously extended by allowing, at step 610 of the Update_Range_Summary_Cells method, the user to redefine the attributes of the Range Summary cell, according to the Associate Range method, so that the cell identified at step 607 be not overwritten.

## Claims

1. A method of processing a range summary cell in a multi dimensional spreadsheet comprising a plurality of cells identified by a cell address along each dimension, said method comprising the steps of:
• defining (509) a range summary cell (410) by specifying in a table (400):
• a range summary cell address (411, 412, 413);
• a cell range address (414) identifying an associated cell range;
said range summary cell address (411, 412, 413) being function of the specified cell range address (414);
In response to an user request (602) for adding or deleting a spreadsheet element sharing a common cell address along at least one dimension with the cell range associated with the range summary cell:
• updating (604) in the table (400), the cell range address (414) of the cell range associated with the range summary cell according to the user request;
• updating (605) in the table, the range summary cell address (411, 412, 413) according to the updated cell range address (414);
• moving (611) in the spreadsheet, the range summary cell according to the updated range summary cell address (411, 412, 413);
• adding or deleting the spreadsheet element according to the user request;
• updating in the table (400), the cell range address (414) after the addition or the deletion of the spreadsheet element;
• updating in the table, the range summary cell address (411, 412, 413) according to the updated cell range address (414).

2. The method according to claim 1 wherein each cell address comprises an address for each dimension. of the spreadsheet, preferably a row address, a column address and a sheet address.

3. The method according to any one of the preceding claims wherein said spreadsheet element is a cell range of one or a plurality of dimensions.

4. The method according to any one of the preceding claims wherein the step of moving (611) in the spreadsheet, the range summary cell according to the updated range summary cell address (411, 412, 413) comprises the step of:
• determining whether or not the updated range summary cell address is already used in the spreadsheet to record information;
If the updated range summary cell address is already used:
• determining whether or not the recorded information can be overwritten:
If the recorded information can be overwritten:
• moving in the spreadsheet the range summary cell according to the updated range summary cell address (411, 412, 413).

5. The method according to claim 4 wherein the step of determining whether or not the recorded information can be overwritten comprises the step of:
• prompting the user to overwrite or not to overwrite the recorded information;

6. The method according to claim 5 wherein the step of prompting the user not to overwrite or to overwrite the recorded information, comprises the further step of:
• prompting the user to update or not to update the range summary cell address.

7. The method according to any one of the preceding claims comprising the further step of:
• updating (504, 505, 508, 509, 510, 512) in the table the specifications of the range summary cell previously defined.

8. The method according to any one of the preceding claims wherein the steps of defining or updating a range summary cell, comprises the further step of:
• modifying one or a plurality of display attributes attached to said range summary cell, said display attributes comprising border line, colour, font, background colour.

9. The method according to any one of the preceding claims wherein the steps of defining or updating a range summary cell, comprises the further step of:
• modifying one or a plurality of display attributes attached to the range associated with said range summary cell, said display attributes comprising border line, colour, font, background colour.

10. A system comprising means adapted for carrying out the steps of the method according to any one of the preceding claims.

11. A computer readable medium comprising instructions adapted for carrying out the steps of the method according to claims 1 to 9.

## Patentansprüche

1. Verfahren zur Verarbeitung einer Bereichssummenzelle in einem mehrdimensionalen elektronischen Arbeitsblatt, das eine Vielzahl von Zellen umfasst, die durch eine Zellenadresse entlang einer jeden Dimension **gekennzeichnet** sind, wobei das Verfahren die folgenden Schritte umfasst:
• Festlegen (509) einer Bereichssummenzelle (410), indem in einer Tabelle (400) Folgendes angegeben wird:
• eine Bereichssummen-Zellenadresse (411, 412, 413);
• eine Zellenbereichsadresse (414), die einen zugehörigen Zellenbereich ausweist;
wobei die Bereichssummen-Zellenadresse (411, 412, 413) von der angegebenen Zellenbereichsadresse (414) abhängig ist;
als Antwort auf eine Benutzeranforderung (602) für das Hinzufügen oder Entfernen eines Elements des elektronischen Arbeitsblattes, das entlang von mindestens einer Dimension eine gemeinsame Zellenadresse mit dem Zellenbereich hat, der zu der Bereichssummenzelle gehört:
• in der Tabelle (400) Aktualisieren (604) der Zellenbereichsadresse (414) des zu der Bereichssummenzelle gehörenden Zellenbereichs entsprechend der Benutzeranforderung;
• Aktualisieren (605) der Bereichssummen-Zellenadresse (411, 412, 413) in der Tabelle entsprechend der aktualisierten Zellenbereichsadresse (414);
• Verschieben (611) der Bereichssummenzelle in dem elektronischen Arbeitsblatt entsprechend der aktualisierten Bereichssummen-Zellenadresse (411, 412, 413);
• Hinzufügen oder Entfernen des Elements des elektronischen Arbeitsblattes entsprechend der Benutzeranforderung;
• Aktualisieren der Zellenbereichsadresse (414) in der Tabelle (400), nachdem das Element des elektronischen Arbeitsblattes hinzugefügt oder entfernt worden ist;
• Aktualisieren der Bereichssummen-Zellenadresse (411, 412, 413) in der Tabelle entsprechend der aktualisierten Zellenbereichsadresse (414).

2. Verfahren nach Anspruch 1, wobei jede Zellenadresse eine Adresse für jede Dimension des elektronischen Arbeitsblattes, vorzugsweise eine Zeilenadresse, eine Spaltenadresse und eine Seitenadresse, umfasst.

3. Verfahren nach einem der vorhergehenden Ansprüche, wobei das Element des elektronischen Arbeitsblattes ein Zellenbereich mit einer oder einer Vielzahl von Dimensionen ist.

4. Verfahren nach einem der vorhergehenden Ansprüche, wobei der Schritt des Verschiebens (611) der Bereichssummenzelle in dem elektronischen Arbeitsblatt entsprechend der aktualisierten Bereichssummen-Zellenadresse (411, 412, 413) den folgenden Schritt umfasst:
Feststellen, ob die aktualisierte Bereichssummen-Zellenadresse bereits in dem elektronischen Arbeitsblatt verwendet wird, um Daten zu erfassen;
wenn die aktualisierte Bereichssummen-Zellenadresse bereits verwendet wird:
• Feststellen, ob die erfassten Daten überschrieben werden können.
Wenn die erfassten Daten überschrieben werden können:
• Verschieben der Bereichssummenzelle in dem elektronischen Arbeitsblatt entsprechend der aktualisierten Bereichssummen-Zellenadresse (411, 412, 413).

5. Verfahren nach Anspruch 4, wobei der Schritt der Feststellung, ob die erfassten Daten überschrieben werden können, den folgenden Schritt umfasst:
• Auffordern des Benutzers, die erfassten Daten zu überschreiben oder nicht zu überschreiben.

6. Verfahren nach Anspruch 5, wobei der Schritt der Aufforderung des Benutzers, die erfassten Daten nicht zu überschreiben oder zu überschreiben, den folgenden weiteren Schritt umfasst:
• Auffordern des Benutzers, die Bereichssummen-Zellenadresse zu aktualisieren oder nicht zu aktualisieren.

7. Verfahren nach einem der vorhergehenden Ansprüche, das den folgenden weiteren Schritt umfasst:
• Aktualisieren (504, 505, 508, 509, 510, 512) der Angaben über die Bereichssummenzelle, die zuvor festgelegt wurde, in der Tabelle.

8. Verfahren nach einem der vorhergehenden Ansprüche, wobei die Schritte der Festlegung oder der Aktualisierung einer Bereichssummenzelle den folgenden weiteren Schritt umfassen:
• Ändern von einem oder einer Vielzahl von Anzeigeattributen, die der Bereichssummenzelle zugeordnet sind, wobei die Anzeigeattribute Rahmen, Farbe, Schriftart, Hintergrundfarbe umfassen.

9. Verfahren nach einem der vorhergehenden Ansprüche, wobei die Schritte der Festlegung oder der Aktualisierung einer Bereichssummenzelle den folgenden weiteren Schritt umfassen:
• Ändern von einem oder einer Vielzahl von Anzeigeattributen, die dem Bereich zugeordnet sind, der zu der Bereichssummenzelle gehört, wobei die Anzeigeattribute Rahmen, Farbe, Schriftart, Hintergrundfarbe umfassen.

10. System, das Mittel umfasst, die so ausgelegt sind, dass sie die Schritte des Verfahrens nach einem der vorhergehenden Ansprüche durchführen.

11. Rechnerlesbares Medium, das Befehle umfasst, die so ausgelegt sind, dass sie die Schritte des Verfahrens nach den Ansprüchen 1 bis 9 durchführen.

## Revendications

1. Procédé permettant de traiter une cellule de résumé de plage dans un tableur multidimensionnel comprenant une pluralité de cellules identifiées par une adresse de cellule dans chaque dimension, ledit procédé comprenant les phases qui consistent à :
définir (509) une cellule (410) de résumé de plage en précisant dans une table :
- une adresse de cellule de résumé (411, 412, 413) ;
- une adresse de plage de cellules (414) identifiant une plage de cellules associée ;
ladite adresse de cellule de résumé (411, 412, 413) étant fonction de l'adresse de plage de cellules précisée (414) ;
en réponse à une requête utilisateur (602) demandant d'ajouter ou de supprimer un élément du tableur partageant, avec la plage de cellules associée à la cellule de résumé de plage, une adresse de cellule commune dans au moins une dimension :
- mettre à jour (604), dans la table (400), l'adresse de plage de cellules (414) de la plage de cellules associée à la cellule de résumé de plage conformément à la requête de l'utilisateur ;
- mettre à jour (605), dans la table l'adresse de la cellule de résumé de plage (411, 412, 413) conformément à l'adresse (414) de plage de cellules mise à jour ;
- déplacer (611) dans le tableur, la cellule de résumé de plage conformément à l'adresse de cellule de résumé de plage mise à jour (411, 412, 413) ;
- ajouter ou supprimer l'élément de tableur conformément à la requête utilisateur ;
- mettre à jour dans la table (400), l'adresse de plage de cellules (414) après l'ajout ou la suppression de l'élément de tableur ;
- mettre à jour dans la table, l'adresse de cellule de résumé de plage (411, 412, 413) conformément à l'adresse de plage de cellules mise à jour (414).

2. Procédé selon la revendication 1, où chaque adresse de cellule comprend une adresse pour chaque dimension du tableur, préférentiellement une adresse de rang, une adresse de colonne et une adresse de feuille.

3. Procédé selon l'une quelconque des revendications précédentes, où ledit élément de tableur est une plage de cellules d'une ou de plusieurs dimensions.

4. Procédé selon l'une quelconque des revendications précédentes, où la phase qui consiste à déplacer (611), dans le tableur, la cellule de résumé de plage conformément à l'adresse de cellule de résumé de plage mise à jour (411, 412, 413) comprend la phase suivante :
- déterminer si l'adresse de cellule de résumé de plage mise à jour est déjà utilisée dans le tableur pour enregistrer une information ;
Si l'adresse de cellule de résumé de plage mise à jour est déjà utilisée :
- déterminer si l'on peut réécrire sur l'information enregistrée :
Si l'on peut réécrire sur l'information enregistrée :
- déplacer, dans le tableur, la cellule de résumé de plage conformément à l'adresse de cellule de résumé de plage mise à jour (411, 412, 413).

5. Procédé selon la revendication 4, où la phase qui consiste à déterminer s'il est possible de réécrire sur l'information enregistrée comprend la phase suivante :
- inviter l'utilisateur à réécrire sur l'information enregistrée ou à ne pas réécrire sur l'information enregistrée.

6. Procédé selon la revendication 5, où la phase qui consiste à inviter l'utilisateur à ne pas réécrire ou à réécrire sur l'information enregistrée comprend en outre la phase suivante :
- inviter l'utilisateur à mettre à jour ou à ne pas mettre à jour l'adresse d'une cellule de résumé de plage.

7. Procédé selon l'une quelconque des revendications précédentes, comprenant en outre la phase suivante:
- mettre à jour (504, 505, 508, 509, 510, 512), dans la table, les précisions de la cellule de résumé de plage définies précédemment.

8. Procédé selon l'une quelconque des revendications précédentes, où les phases de définition ou de mise à jour d'une cellule de résumé de plage comprennent en outre la phase suivante :
- modifier un ou plusieurs attributs d'affichage rattachés à ladite cellule de résumé de plage, lesdits attributs d'affichage comprenant préférablement la bordure, la couleur, la police, la couleur du fond.

9. Procédé selon l'une quelconque des revendications précédentes, où les phases de définition ou de mise à jour d'une cellule de résumé de plage comprennent en outre la phase suivante :
- modifier un ou plusieurs attributs d'affichage rattachés à la plage associée à ladite cellule de résumé de plage, lesdits attributs d'affichage comprenant préférablement la bordure, la couleur, la police, la couleur du fond.

10. Système comprenant un moyen servant à réaliser les phases du procédé selon l'une quelconque des revendications précédentes.

11. Support lisible par ordinateur comprenant des instructions servant à réaliser les phases du procédé selon les revendications 1 à 9.
